# DEMANDE DE BREVET EUROPEEN

(11) **EP 1 031 484 A1**
(43) Date de publication de la demande: **30.08.2000**
(21) Numéro de dépôt: 00400515.3
(22) Date de dépôt: 25.02.2000
(51) Int. Cl.: B60T 7/04, G05G 5/03

(54) **Dispositif d'avertissement de la désactivation d'un système de régulation automatique de l'allure d'un véhicule**

(30) Priorité: 26.02.1999 FR 9902442
(71) Demandeur: THOMSON-CSF, 75008 Paris (FR)
(72) Inventeur: Artis, Jean-Paul, Thomson-CSF Propriété Intel., 94117 Arcueil Cedex (FR); Callac, Maurice, Thomson-CSF Propriété Intel., 94117 Arcueil Cedex (FR)
(74) Mandataire: Lucas, Laurent Jacques

(57) **Abrégé**

La présente invention concerne un dispositif d'avertissement de la désactivation d'un système de régulation automatique de l'allure d'un véhicule.

Le dispositif comporte des moyens de génération d'un signal tactile (22) au niveau de l'organe de commande des freins activé par le conducteur du véhicule, ce signal tactile formant avertissement de la désactivation de la régulation automatique.

L'invention s'applique notamment pour des véhicules équipés de moyens de contrôle de distance et/ou de vitesse d'obstacles situés sur la trajectoire du véhicule, et dont l'allure est régulée en fonction des informations de distances et/ou des vitesses fournies par lesdits moyens. Plus généralement, elle s'applique à tous véhicules équipés de moyens de régulation automatique de leur allure.

## Description

La présente invention concerne un dispositif d'avertissement de la désactivation d'un système de régulation automatique de l'allure d'un véhicule. Elle s'applique notamment pour des véhicules équipés de moyens de contrôle de distance et/ou de vitesse d'obstacles situés sur la trajectoire du véhicule, et dont l'allure est régulée en fonction des informations de distances et/ou des vitesses fournies par lesdits moyens. Plus généralement, elle s'applique à tous véhicules équipés de moyens de régulation automatique de leur allure.

Il est connu d'équiper des véhicules de moyens de mesures de distance et/ou de vitesse de véhicules ou d'obstacles les précédant. Ces moyens, par exemple à base de techniques radars, fournissent des informations qui peuvent être exploitées de différentes manières. Un cas d'exploitation simple consiste par exemple à fournir une information visuelle à suivre, au conducteur du véhicule, en cas de franchissement d'un seuil de distance de sécurité. C'est au conducteur d'agir alors de lui-même sur le système de freinage du véhicule.

Un cas plus élaboré peut consister à mettre en oeuvre un freinage automatique par asservissement du système de freinage du véhicule sur les informations fournies par les moyens de mesures. Dans ce cas, le conducteur n'a pas directement la maîtrise du système. Il faut cependant prévoir la possibilité de lui donner l'entière maîtrise du système de freinage, indépendamment des informations fournies par les moyens de mesures de distance et/ou de vitesse.

En particulier, dans les systèmes de régulation d'allure pour véhicules automobiles, une action du conducteur sur la pédale de freins, sous certaines conditions, peut remettre le système en position libre, c'est-à-dire sous la maîtrise entière du conducteur. Cela peut se produire, en règle générale, lorsque la force de freinage provoquée par le conducteur est notamment très supérieure à celle qui aurait résulté de l'asservissement du système ou lorsque la vitesse obtenue est très différente de celle que le système aurait obtenu sans l'action du conducteur sur les freins. Cette transition du système, d'un état asservi à un état libre, doit être accompagnée d'une information au conducteur. Cette information peut être par exemple une indication lumineuse, par allumage ou extinction d'un voyant sur le tableau de bord. Elle peut être encore par exemple une indication sonore, générée par un haut-parleur.

Il est en effet très important que le conducteur ait compris que le système de freinage automatique a été désactivé. Dans la négative, la situation peut être extrêmement dangereuse car le conducteur croit que son système de freinage automatique est toujours actif et donc en particulier que son véhicule va freiner à l'approche d'un obstacle. Une collision est alors possible si le conducteur met trop de temps pour comprendre qu'en fait son système est désactivé et que c'est à lui d'agir.

L'expérience montre qu'une indication par voyant est très peu efficace. En effet, passés les premiers kilomètres au volant de son véhicule, le conducteur ne regarde qu'épisodiquement son tableau de bord, et en particulier pas dans les situations critiques de conduite.

Un signal sonore peut, quant à lui, ne pas être entendu à cause par exemple du bruit ambiant ou mal interprété dans le cas notamment où ce signal sonore peut venir de plusieurs causes possibles. Par ailleurs, un signal sonore répété trop souvent peut s'avérer irritant pour le conducteur ou ses passagers, notamment en cas de circulation dense où le conducteur est amené à souvent appuyer sur sa pédale de freins.

Un but de l'invention est de pallier ces inconvénients en permettant au conducteur d'un véhicule à système de freinage automatique de lui fournir une information fiable selon laquelle le système est désactivé. A cet effet, l'invention a pour objet un dispositif d'avertissement de la désactivation d'un système de régulation automatique de l'allure d'un véhicule automobile, caractérisé en qu'il comporte des moyens de génération d'un signal tactile au niveau de l'organe de commande des freins activé par le conducteur du véhicule, ce signal tactile formant avertissement de la désactivation de la régulation automatique.

L'invention a pour principaux avantages qu'elle ne perturbe pas l'attention du conducteur, qu'elle ne provoque aucune gêne pour ce dernier ou ses passagers, qu'elle introduit une grande sûreté de fonctionnement, qu'elle est économique et qu'elle est simple à mettre en oeuvre.

D'autres caractéristiques et avantages de l'invention apparaîtront à l'aide de la description qui suit faite en regard de dessins annexés qui représentent :
- la figure 1, par un synoptique, un mode de réalisation possible d'un dispositif selon l'invention ;
- la figure 2, un exemple de réalisation possible d'un dispositif selon l'invention ;
- la figure 3, un autre exemple de réalisation possible d'un dispositif selon l'invention ;
- la figure 4, par un synoptique simplifié, un asservissement du niveau de pression dans le circuit de commande hydraulique des freins d'un véhicule, couplé à des moyens de génération d'un signal tactile.

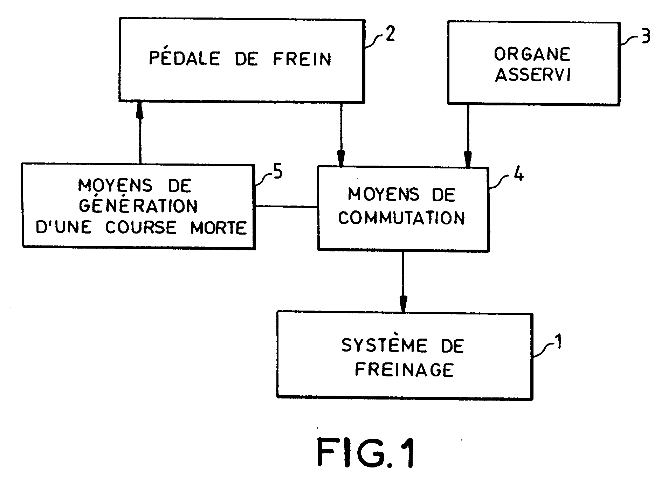

La figure 1 présente par un synoptique un mode de réalisation possible d'un dispositif selon l'invention, dans son environnement opérationnel. Le dispositif selon l'invention équipe un véhicule dont l'allure peut être régulée automatiquement. L'allure du véhicule est notamment régulée par une action sur son système de freinage 1. A titre d'exemple, la figure 1 présente un cas où l'allure est régulée par action sur le système de freinage, néanmoins l'invention s'applique aussi à un cas où la régulation d'allure est effectuée par action sur le système de freinage et/ou le système d'accélération.

L'action peut être produite classiquement par l'intermédiaire d'une pédale de frein 2, ou tout autre organe commandable par un conducteur. Généralement, il s'agit d'une pédale de frein activée par un pied, mais il est possible de prévoir une pédale, ou un organe mécanique équivalent commandable, par d'autres parties du corps du conducteur, par exemple la main. En mode non automatique, l'allure du véhicule, c'est-à-dire son freinage, est commandée directement par le conducteur, via la pédale de frein 2.

A cette commande directe est couplée une commande automatique, sachant que le fonctionnement de l'une exclut le fonctionnement de l'autre. La commande automatique du véhicule peut se faire selon différentes conditions, et plus particulièrement en fonction de certaines informations. En mode automatique, un organe asservi 3 active le système de freinage. Cet organe 3 est lui-même activé en fonction des conditions ou des informations précitées. A titre d'exemple, les informations peuvent être des informations de distance et/ou de vitesse concernant un véhicule précédant le véhicule porteur. Ces informations sont alors fournies par un radar, ou tout autre moyen de détection, placé à l'avant du véhicule, à des moyens de traitement. Ces moyens de traitement élaborent une information de commande de freinage destinée à l'organe asservi 3 en fonction de la distance et/ou de la vitesse mesurée. Si le véhicule se rapproche trop près du véhicule qui le précède, les moyens de traitement envoient alors un ordre de freinage à l'organe asservi. Des moyens d'interface transforment le signal de commande en un signal de puissance capable d'activer l'organe.

Pour différentes raisons, l'allure du véhicule ne peut pas être en permanence commandée automatiquement. A cet effet, des moyens de commutation 4 permettent notamment de passer d'une commande automatique à une commande par la pédale de frein 2. Dans l'exemple précédent, en cas de circulation dense, le freinage du conducteur par action sur la pédale de frein peut s'avérer indispensable.

La commutation de la commande automatique à la commande par pédale de frein peut par exemple s'effectuer lorsque l'action de freinage provoquée par le conducteur par l'intermédiaire de la pédale de frein est supérieure à celle demandée par les moyens de traitement via l'organe de traitement, ou encore par exemple lorsque la vitesse obtenue est très différente de celle que le système aurait obtenu sans l'action du conducteur sur les freins. Il est cependant nécessaire d'avertir le conducteur, de la façon la plus fiable possible, que la commande d'allure automatique a été ainsi désactivée et que c'est bien lui qui commande le freinage. Il a été vu précédemment que les indicateurs visuels ou sonores manquaient de fiabilité et pouvaient de surcroît entraîner des nuisances.

Pour informer le conducteur que la régulation d'allure automatique, ou plus précisément que le freinage automatique dans l'exemple de la figure 1, sont désactivés, l'invention comporte des moyens 5 de génération d'une course morte de la pédale de frein. Le conducteur qui est en train d'agir sur la pédale de frein ressent clairement par son pied cette course morte. Par cette information tactile, issue de son action sur la pédale de frein, le conducteur comprend parfaitement que le freinage automatique est désactivé et qu'à partir de la perception de cette information, il doit gérer seul le comportement de son véhicule et en particulier les actions de freinage. La course morte de la pédale peut ne s'effectuer que sur un angle faible, mais néanmoins suffisant pour que le conducteur puisse prendre conscience de l'information associée.

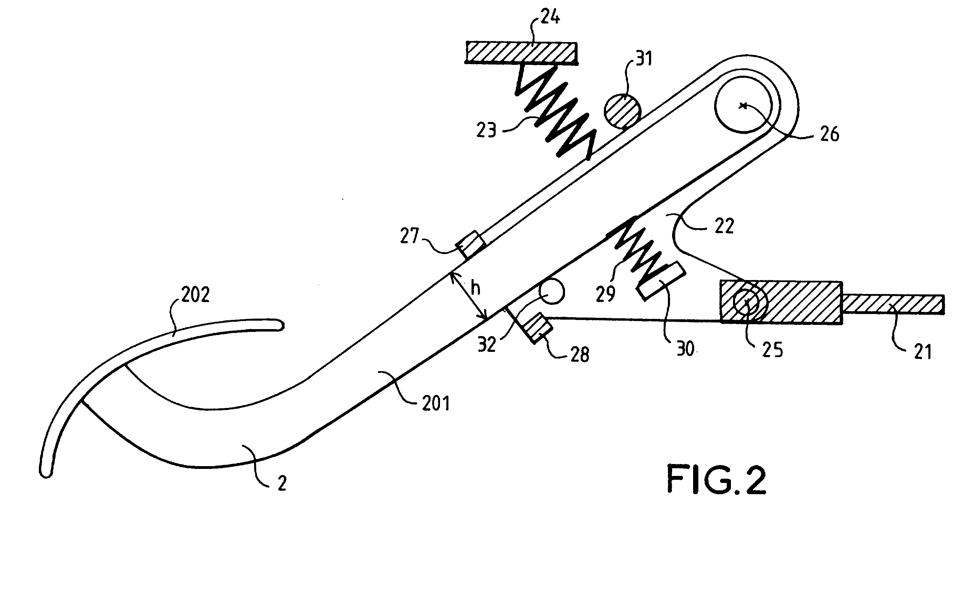

La figure 2 présente un exemple de réalisation possible d'un dispositif selon l'invention dans un mode du type de la figure 1. Dans un système de freinage, la commande de freinage est en général transmise aux freins par l'intermédiaire d'un maître cylindre 21 qui agit sur la pression des freins selon un mécanisme connu. Dans le mode de réalisation tel que présenté par la figure 2, la pédale de frein 2 agit sur le maître cylindre 21 par l'intermédiaire d'une chape 22. Les moyens de génération d'une course morte comportent cette chape 22. Cette dernière est couplée au maître cylindre 21, un premier ressort de rappel 23 la maintient vers le haut en position de repos, le ressort de rappel 23 étant lié par une de ses extrémités à une partie fixe 24, par rapport au châssis du véhicule. Dans sa partie basse, la chape 22 s'articule sur le maître cylindre 21 par une fixation à au moins un degré de liberté en rotation, par rapport à un axe 25 perpendiculaire au plan de figure. Le mouvement de rotation de la chape 22 par rapport au maître cylindre 21 se traduit par un mouvement rectiligne de ce dernier qui est transmis aux freins, créant ainsi un mouvement de type bielle. La course de la chape vers le haut est limitée par une butée haute 31, fixe par rapport au châssis du véhicule.

La chape 22 supporte par exemple la pédale 2. Plus particulièrement, la pédale s'articule par exemple sur la chape 22 par une fixation à au moins un degré de liberté en rotation par rapport à un axe 26 perpendiculaire au plan de la figure. La pédale 2 est composée par exemple d'un corps 201 et d'un plateau 202 destiné à accueillir le pied du conducteur. Le corps 201 de la pédale est par exemple fixé à la chape 22 dans la partie haute de cette dernière. La pédale est mobile par rapport à la chape entre une butée haute 27 et une butée basse 28. Un deuxième ressort de rappel 29 maintient la pédale vers la butée haute 27, par exemple au contact de cette dernière. A cet effet, ce ressort de rappel 29 est lié par une de ses extrémités à une partie fixe 30 liée à la chape 22.

La course de la pédale 2 par rapport à la chape 22 peut aussi être limitée vers le bas par un élément commandable 32. Cet élément 32 peut bloquer la pédale ou restreindre sa course entre la butée haute 27 et lui-même. L'élément commandable 32 est par exemple le pêne d'un verrou commandable par exemple par électro-aimant. La commande de cet élément 32 est notamment telle que lorsque le freinage automatique est désactivé, il s'efface pour laisser la pédale continuer sa course par rapport à la chape.

Ainsi, en conduite normale, en l'absence de freinage ou de freinage moyen de la part du conducteur, le freinage étant par exemple par ailleurs commandé par des moyens automatiques non représentés sur la figure 2, l'élément commandable 32 bloque la pédale de frein par rapport à la chape 22. S'il s'agit du pêne d'un verrou commandé par un électro-aimant, il reste en position de blocage par exemple en l'absence de commande de l'électro-aimant, c'est-à-dire en l'absence de courant dans ce dernier, le contraire étant possible. L'effort de freinage est alors transmis par l'élément commandable ou par le verrou. Tant que cet effort ne dépasse pas un seuil donné, le freinage automatique continue par exemple à opérer.

Lorsque le freinage automatique est désactivé, par exemple lorsque l'effort de freinage transmis par l'élément commandable ou le pêne 32 dépasse le seuil donné précité, l'élément commandable est commandé de telle sorte qu'il se retire pour laisser la pédale 2 continuer sa course jusqu'à la butée basse 28 de la chape 22, sous l'effet de la force de freinage appliquée par le conducteur sur la pédale. S'il s'agit d'un pêne commandé par un électro-aimant, ce dernier est par exemple parcouru par une impulsion de courant nécessaire au déplacement du pêne.

Ainsi, par le retrait de l'élément commandable 32, la pédale décrit une course morte jusqu'à ce qu'elle rencontre la butée basse 28, la pédale continuant ensuite à transmettre l'effort de freinage par la butée basse. C'est cette course morte qui permet d'attirer l'attention du conducteur relatif au changement d'état du système de régulation d'allure du véhicule. Il s'agit d'une course morte entre les deux butées 27, 28 car le conducteur ne ressent alors plus la force contraire transmise par le maître cylindre via la chape 22. La seule contrainte qu'il ressent est celle du deuxième ressort de rappel 29 qui est nettement moins forte que la force contraire transmise par le maître cylindre.

Lors de la fin du freinage, la chape et la pédale reviennent en position haute sous les actions respectives des premier et deuxième ressorts de rappel 23, 29. A la suite de ce retour en position haute, l'élément commandable 32 revient bloquer la course vers le bas de la pédale 2. Cet élément est par exemple remis dans cette position sous l'action d'un ressort de rappel non représenté. S'il s'agit d'un pêne commandé par un électro-aimant, le ressort de rappel maintient ce pêne en position de blocage en l'absence de commande de l'électro-aimant, plus particulièrement en l'absence de courant parcourant ce dernier. La largeur h du corps de la pédale de frein est telle que lorsque celui-ci est au contact de la butée basse 28, il reste en vis-à-vis de l'élément commandable 32 de façon à bloquer ce dernier en position rétractée. Cela évite notamment que cet élément commandable 32 reviennent en position de blocage sous l'effet par exemple de son ressort de rappel, et empêche alors le retour de la pédale, mais cette fois vers la butée haute 27.

Un mode de réalisation selon la figure 2 a notamment comme avantage d'apporter une grande sécurité de fonctionnement. En cas de panne du verrou ou de la commande de l'élément commandable 32, que ce dernier soit en position toujours bloqué ou toujours débloqué, la commande de frein fonctionne toujours. Les moyens de génération de la course morte ne nuisent donc nullement au bon fonctionnement des freins.

Il est possible de prévoir un autre exemple de réalisation d'un dispositif selon l'invention produisant un signal tactile d'avertissement tel que notamment une course morte de la pédale de frein. Il est ainsi envisageable de réaliser ce signal tactile, non pas de façon mécanique comme dans la figure 2, mais par exemple par une commande électronique activant, via une interface appropriée, une électrovanne, ou servo-valve, du circuit hydraulique de freinage. Le signal tactile peut ainsi être réalisé par une mise en purge astucieuse du circuit hydraulique de freinage au moyen de l'électrovanne précitée débouchant sur une cavité vide. Les moyens de génération de la course morte activent alors cette électrovanne. Suite à l'ouverture de l'électrovanne, la cavité se remplit de liquide hydraulique. En régulation automatique d'allure, ou en absence de freinage ou en faible freinage de la part du conducteur, l'électrovanne est en position fermée. Lorsque le conducteur freine suffisamment fort de sorte que la régulation automatique de l'allure se désactive, les moyens de génération de la course morte envoient un signal pour ouvrir l'électrovanne. Suite à l'ouverture de l'électrovanne la cavité se vide d'air. Une dépression est ainsi créée dans le circuit hydraulique de freinage, ce qui provoque la course morte de la pédale de frein. En continuant d'appuyer sur la pédale le conducteur compense la dépression créée précédemment et l'action de freinage redevient normale, le conducteur étant informé par le signal tactile qu'il vient de ressentir qu'il a le contrôle de la régulation d'allure du véhicule, en freinage et/ou éventuellement en accélération. En fin de freinage, l'électrovanne n'étant plus commandée en ouverture, la cavité se remplit d'air par exemple par un système de clapet.

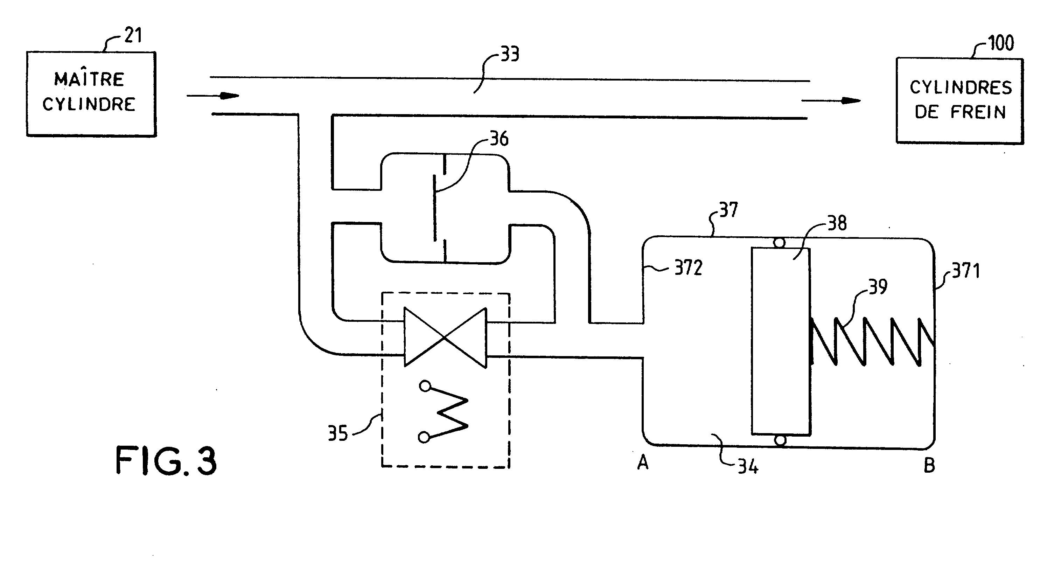

La figure 3 illustre par un exemple de mise en oeuvre, cet autre mode de réalisation possible d'un dispositif selon l'invention. Cette figure présente une partie 33 du circuit hydraulique principal de freinage, le liquide de freinage étant poussé depuis le maître cylindre 21 vers les cylindres de frein 100. Le dispositif selon l'invention comporte un circuit hydraulique secondaire relié au circuit principal 33. Une partie du liquide de freinage peut être dérivée dans ce circuit secondaire pour provoquer la course morte de la pédale de frein. Ce circuit secondaire comporte par exemple la cavité 34, l'électrovanne 35 et le clapet de décharge 36. La cavité est par exemple constituée d'un cylindre 37 dans lequel se déplace un piston 38. Un ressort de rappel 39, par exemple placé entre le piston et une base 371 du cylindre, agit sur le piston 38. Sur la base opposée 372 du cylindre est prévue une ouverture pour accueillir le liquide de freinage dans la cavité, celle-ci étant remplie de liquide entre cette base 372 et le piston 39. L'ouverture de la cavité 34 est reliée au circuit hydraulique principal 33 par deux branches, une branche comportant l'électrovanne 35 et une branche comportant le clapet de décharge 36.

En position de repos, la cavité est vide. Le piston est en position A, sensiblement plaqué contre la base 372 de la cavité, sous l'effet du ressort de rappel 39. Le freinage est alors normal. Tout le liquide de freinage passe vers les cylindres de frein. Lorsque la régulation d'allure est désactivée, l'électrovanne 35 est commandée en ouverture. Par la pression exercée par la pédale de frein, le système à clapet 36 se ferme et une partie du liquide de freinage passe alors dans la cavité 34, le piston 38 étant poussé de la position A précédente vers une position B, en fait vers l'autre base 371 du cylindre. La poussée exercée par le liquide de freinage sur le piston est alors supérieure à la force de rappel exercée par le ressort 39. Durant le passage du piston 38 de la position A à la position B, la force transmise par le maître cylindre sert en fait à la poussée de ce piston pour le remplissage de la cavité. La force que ressent le conducteur pendant cette phase de remplissage de la cavité est donc celle produite par la force de rappel du ressort 39 à l'intérieur du cylindre 37. Cette force, qui est par exemple très inférieure à celle exercée par les cylindres de frein, est alors nettement ressentie par le conducteur au niveau de la pédale de frein. La course correspondante de la pédale de frein est alors une course morte pendant laquelle les cylindres de frein 100 ne sont pas sollicités.

Une fois le piston en position B, la force de freinage est intégralement transmise aux cylindres de frein, que l'électrovanne reste ouverte ou soit refermée. En fin de freinage, lorsque le conducteur relève le pied, la pression tombe dans le circuit hydraulique. Le piston 38, poussé par le ressort de rappel 39 revient alors en position A. Le clapet de décharge 36, sous l'effet de la baisse de pression s'ouvre et permet alors l'évacuation du liquide dans le circuit principal 33, et dans le réservoir hydraulique par l'intermédiaire d'un clapet intégré dans le maître cylindre. D'autres moyens pourraient être prévus permettant de vider la cavité 34 alors que la pédale est relâchée.

Les exemples de réalisation précédents sont présentés avec un signal tactile au conducteur qui a la forme d'une course morte de la pédale de frein. Il est possible d'envisager d'autres types de signaux tactiles pourvu que ceux-ci agissent sur l'organe de commande de freinage directement accessible au conducteur, plus précisément l'organe de commande de freinage activé par le conducteur. Dans la plupart des cas, cet organe de freinage est la pédale de frein. En cas de danger, mais aussi durant tout le temps de sa conduite, c'est sur cet organe ou cette pédale de frein que le conducteur agit de façon volontaire. Il en est donc attentif au toucher. Toute modification de sa sensation habituelle, par un signal tactile du type course morte mais aussi de toute autre forme, ne passe donc pas inaperçue.

Le signal tactile peut être transitoire. Il peut par exemple prendre la forme d'un signal vibratoire transitoire, ou impulsionnel. Dans la plupart des systèmes de freinage connus, l'action mécanique générée par la pédale de frein est couplée à un système d'asservissement de freinage qui commande une servo-valve. Cette dernière agit sur le circuit hydraulique de freinage. Il est alors très simple, par une commande électronique d'injecter dans la boucle d'asservissement de la servo-valve, qui entraîne une dépression ou surpression impulsionnelle, ou vibratoire, du circuit hydraulique, sensible au niveau de la pédale de frein. Il suffit alors d'injecter, par exemple au niveau de la consigne du circuit d'asservissement de la servo-valve un signal impulsionnel ou un signal transitoire. Des moyens de génération d'un signal tactile peuvent créer ce signal.

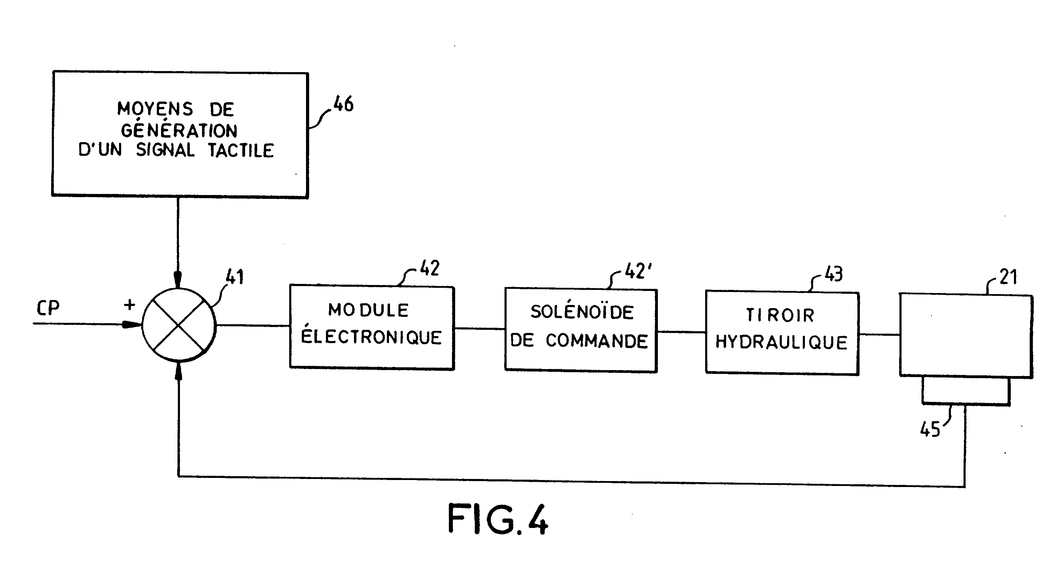

La figure 4 illustre, par un synoptique simplifié, une mise en oeuvre possible pour injecter des perturbations transitoires dans le circuit hydraulique de freinage, répercutées au niveau de la pédale de frein. Le synoptique comporte des éléments d'un système d'asservissement de freinage classique. Une consigne de pression CP, traduite en grandeur électrique, est envoyée sur un comparateur 41. Cette grandeur électrique est fonction du niveau de freinage demandé. La sortie du comparateur est prise en compte par un module électronique 42 qui calcule l'asservissement proprement dit. Ce module électronique commande par exemple, au moyen d'interfaces appropriées le courant dans un solénoïde 42'. Ce dernier commande la position d'un tiroir hydraulique 43, ou servo-valve, qui commande la pression dans le circuit hydraulique des freins par action sur le maître cylindre 21. La pédale de frein 2 est par ailleurs elle-même entraînée par le tiroir 43. Un capteur de pression 45 reboucle par exemple le circuit d'asservissement en envoyant la valeur de pression au comparateur 41 sous forme d'une grandeur électrique. La pression dans le circuit hydraulique des freins est ainsi asservie à la valeur de consigne CP. Pour introduire un signal mécanique transitoire au niveau des circuits hydrauliques, l'invehtion prévoit, par les moyens de génération d'un signal tactile 46, de superposer un signal électrique transitoire au niveau de la consigne CP, plus particulièrement au niveau du comparateur 41. Le signal électrique peut être vibratoire ou impulsionnel par exemple. Le signal mécanique transitoire n'est évidemment pas répercuté sur le véhicule lui-même en raison de son inertie mécanique, mais est répercuté sur la pédale de frein notamment par l'intermédiaire du tiroir hydraulique, ce qui produit un signal tactile à l'attention du conducteur. Une éventuelle légère décélération, cependant produite, participe elle aussi au signal tactile ressenti par le conducteur. Ce dernier est ainsi averti de la prise de contrôle par lui-même de l'allure du véhicule. Un tel signal tactile est très simple à mettre en oeuvre. Il est notamment très facile de combiner un signal électrique au signal de consigne CP. Eventuellement le signal électrique transitoire peut être injecté à un autre endroit qu'au niveau du comparateur 41. Il peut par exemple être combiné dans le module électronique 42. Cette simplicité de réalisation rend aussi l'invention économique.

L'invention s'applique pour tous systèmes de régulation automatique de l'allure d'un véhicule, que le système agit notamment sur le freinage et/ou l'accélération. Elle ne perturbe pas l'attention du conducteur et ne provoque aucune gêne à son égard ou à celui de ses passagers.

Les moyens de mesures de distances et/ou de vitesses évoqués précédemment relativement à l'invention concernent des techniques radar. Il est cependant possible d'envisager d'autres techniques de mesures, par exemple des techniques optiques. En fait, l'invention est indépendante des moyens de mesures de distances et/ou de vitesses mis en oeuvre.

## Revendications

1. Dispositif d'avertissement de la désactivation d'un système de régulation automatique de l'allure d'un véhicule automobile, caractérisé en qu'il comporte des moyens de génération d'un signal tactile (5, 46, 22, 34, 35, 36) au niveau de l'organe de commande des freins activé par le conducteur du véhicule, ce signal tactile formant avertissement de la désactivation de la régulation automatique, le signal tactile prenant la forme d'une course morte de l'organe de commande des freins (2).

2. Dispositif selon la revendication 1, caractérisé en ce que l'organe de commande des freins est la pédale de frein (2).

3. Dispositif selon la revendication 2, caractérisé en ce que les moyens de génération d'un signal tactile comportent un chape (22) couplée à un maître cylindre (21), la pédale de frein (2) agissant sur le maître cylindre par l'intermédiaire de la chape (22), la chape (22) comportant au moins :
- une butée haute (27) et une butée basse (28) entre lesquelles la pédale (2) peut se déplacer ;
- un élément commandable (32) bloquant la pédale vers la butée haute (27) ;
l'élément commandable (32) se retirant lors de la désactivation du système de régulation automatique de l'allure du véhicule, de sorte que la pédale se déplace vers la butée basse (28) sous la force exercée par le conducteur, la course vers la butée basse constituant le signal tactile.

4. Dispositif selon la revendication 3, caractérisé en ce que l'élément commandable (32) est le pêne d'un verrou commandé par un électro-aimant, le pêne étant maintenu en position de blocage en l'absence de courant dans l'électro-aimant.

5. Dispositif selon l'une quelconque des revendications 3 ou 4, caractérisé en ce que la chape (22) est maintenue en position haute par un ressort de rappel (23).

6. Dispositif selon l'une quelconque des revendications 3 à 5, caractérisé en ce que la pédale est maintenue vers la butée haute (27) par un ressort de rappel (29).

7. Dispositif selon l'une quelconque des revendications 3 à 6, caractérisé en ce que la chape (22) coopère avec le maître cylindre (21) par une liaison à au moins un degré de liberté en rotation, la mouvement circulaire de la chape se transmettant en un mouvement rectiligne au maître cylindre.

8. Dispositif selon l'une quelconque des revendications 3 à 7, caractérisé en ce que lorsque l'effort de freinage transmis par l'élément commandable (32) dépasse un seuil donné, l'élément commandable est commandé pour se retirer.

9. Dispositif selon l'une quelconque des revendications 1 ou 2, caractérisé en ce que les moyens de génération du signal tactile (5) comportent un circuit hydraulique secondaire (34, 35, 36) relié au circuit hydraulique principal, dans lequel est dérivé, le signal tactile étant la course morte de l'organe de commande des freins provoquée par la dérivation du liquide de frein.

10. Dispositif selon la revendication 9, caractérisé en ce que le circuit secondaire comporte au moins une cavité (34), une électrovanne (35) et des moyens de décharge (36) de la cavité, la course morte étant produite par le remplissage de la cavité, l'électrovanne étant commandée en ouverture lors de la désactivation du système de régulation d'allure, les moyens de décharge permettant de vider la cavité en fin de freinage.

11. Dispositif selon la revendication 10, caractérisé en ce que la cavité (34) est constituée d'un cylindre (37) dans lequel se déplace un piston (38), un ressort de rappel (39) agissant sur le piston, l'ouverture de la cavité (34) étant reliée au circuit hydraulique principal (33) par deux branches, une branche comportant l'électrovanne (35) et une branche comportant les moyens de décharge (36), le piston (38) se déplaçant d'une position A à une position B sous l'effet de la pression du liquide de freinage et étant rappelé vers la position A sous l'effet du ressort de rappel (39) lorsque la pression tombe dans le circuit hydraulique.

12. Dispositif selon l'une quelconque des revendications 10 ou 12, caractérisé en ce que les moyens de décharge sont un système à clapet (36) qui se ferme sous lorsque le liquide de freinage est en pression et s'ouvre lorsque la pression tombe, permettant l'évacuation du liquide de la cavité (34).

13. Dispositif selon l'une quelconque des revendications 1 ou 2, caractérisé en ce que les moyens de génération du signal tactile (46) envoient un signal électrique dans un circuit d'asservissement (41, 42, 42', 43, 45) de la pression des freins comportant au moins un module électronique (42) qui agit sur la position d'un tiroir hydraulique (43) commandant le niveau de pression et entraînant l'organe (2) de commande des freins, créant un signal mécanique qui se répercute sur l'organe (2) de commande des freins.

14. Dispositif selon la revendication 13, caractérisé en ce que les moyens de génération du signal tactile (46) envoient un signal qui se superpose au signal de consigne (CP) du circuit d'asservissement.

15. Dispositif selon l'une quelconque des revendications 13 ou 14, caractérisé en ce que le signal est vibratoire.

16. Dispositif selon l'une quelconque des revendications 13 ou 14, caractérisé en ce que le signal est impulsionnel.
